# EUROPEAN PATENT APPLICATION

(11) **EP 1 363 176 A1**
(43) Date of publication of application: **19.11.2003**
(21) Application number: 02700710.3
(22) Date of filing: 22.02.2002
(51) Int. Cl.: G05B 23/02, G06F 17/60

(54) **PLANT SERVICE DATA SERVER AND SERVICE INFORMATION PROVIDING METHOD**

(30) Priority: 23.02.2001 JP 2001048526
(71) Applicant: Kabushiki Kaisha Toshiba, Tokyo 105-8001 (JP)
(72) Inventor: HIRANO, Shigeru, 101, Raionzuviaare-Fuchu, Fuchu-shi, Tokyo 183-0031 (JP); GOTO, Masanori, 305, Akitsu-Ichibankan, Higashimurayama-shi, Tokyo 189-0001 (JP); FUKUI, Hiroji, 2-106, Fuchu-Guriinhaitsu, Fuchu-shi, Tokyo 183-0057 (JP); OOMORI, Kenji, Kitatsuru-gun, Yamanashi (JP); KAWAMOTO, Shinji, 60, Haitaun-Kajigaya, Kawasaki-shi, Kanagawa 213-0013 (JP)
(74) Representative: HOFFMANN EITLE
(86) International application number: JP0201610
(87) International publication number: WO02067069

(57) **Abstract**

A plant-service data server (9) for providing a manager (2) of a plant (7) with service information useful for management of a plant (7) based on operation data relating to the operation condition of the plant (7). The data server (9) comprises means (18) for receiving operation data from the plant (7) through a communication network (5), operation-data storing means (25) for storing the operation data, service-information-providing item registering means (21) for registering service-information-providing items which are useful for management of the operation of the plant and are provided by a plurality of service information providers (4) that provide service information useful for operation of a plant based on at least part of the operation data, service-information acquiring means for acquiring service information corresponding to service-information-providing items based on the operation data, and means (18) for transmitting the acquired service information to the manager (2) of the plant through the communication network (5).

## Description

### Technical Field

The present invention is related to a plant-service data server for providing information for operation management of plants such as power generation plants, and to a method for providing plant-service information.

### Background Art

Generally, plants such as power generation plants comprise various component devices. A thermal power generation plant, for example, comprises: a boiler which generates high temperature and high pressure steam by burning fuel such as LNG and coal; a turbine which converts the energy of the high temperature and high pressure steam generated by the boiler into rotational kinetic energy; a generator which generates electric power utilizing the rotational kinetic energy; and various other devices such as pumps and valves. Such devices are rarely provided by a single manufacturer (or maker). Instead, they are typically provided by a plurality of manufacturers -- the boiler may be provided by Manufacturer A, while the turbine may be provided by Manufacturer B, for example. Besides, typically there are many of such power generation plants comprising similar component devices in the world.

Such plants have many sensors at various locations to detect the operation conditions, for example. Each sensor signal from each sensor is received by a process computer for controlling the plant operation, and is used instantly as data for controlling. Each sensor signal is also sent periodically to a data server from the process computer or other plant-data collecting device as plant data, and is stored there as historical data.

The plant data stored in the data server are periodically compiled using a compiling function of the data server and analyzed by a user (an electric company, for example) that administers the power plant. When more intensive analysis or device diagnosis is needed requiring more experts'. knowledge, essential data are selected from the history data, and provided to the manufacturer of the device to be analyzed in detail and to be diagnosed. Such an in-depth analysis or diagnostic process is usually conducted by the manufacturer that has know-how about the plant component device, arid the plant data must be provided by the user that administrates the plant to the manufacturer through some kind of means.

For example, the device diagnostic processing or efficiency analysis of a thermal power generation plant may be conducted by the user itself or may be ordered to the manufacture. If the data analysis and diagnosis are conducted by the user, the data processing is conducted utilizing the diagnostic and analytical function and the efficiency calculation function, based upon the plant history data stored in the data server which is disposed at each power plant.

If the analysis is conducted by the manufacture, the data of the items and the period, which are needed to diagnose the device, are chosen from the data server, and are converted into files of a general-purpose data format. Then, the data are stored in a data storing medium and sent out to the manufacture that diagnoses the data. The manufacture converts the data into an analyzable data format, analyze the data, and report the result to the user.

In some cases, personnel of the manufacturer are dispatched to the power plant to analyze the data using the data stored in the data server.

Thus, in the prior art, when service such as analysis and diagnosis is to be provided, a data server is needed to be set in each plant site, and data history management must be conducted and compilation and analysis programs must be installed in the data server. Thus, the user must bear the heavy burden of equipment investment.

When the data analysis is ordered to the manufacture, data selection from the data server, data conversion, storing the data in another medium and sending the data must be conducted, or alternatively, personnel of the manufacture must visit the site and conduct the analysis or diagnosis of the plant data there. Therefore, in such a method, the handing over and handling of the plant data are complicated and cost much for both the manufacture and the user. Besides, it was difficult to compare and study plant data of different but similar plants because the service is provided based upon the plant data only of the particular plant to be analyzed or diagnosed, although there were similar plants in other sites.

Thus, in accordance with recent development of computer technology and communication network, new methods are studied by which the plant data are provided from the sites to the manufacturers via communication network.

According to one of the methods, only required plant data are provided from a data server disposed in a site to the manufacturer via the communication network. In this case, initial investment is needed when the data server is introduced, and the plant operators must conduct maintenance of the data server in addition to the plant operation such as plant monitoring. However, many of the plant data are confidential and there are plurality of manufactures that provided the plant component devices. Therefore, the operators must decide the plant data to be provided to each manufacture case by case, and the burden on the operators may possibly increase. Furthermore, if the plant data of the other site are to be provided, cooperation between the operators are indispensable.

Another method is studied, by which the data server is disposed on the manufacture's side, and the plant data collected in the site are sent to the data server on the manufacturer's side. In this case, the selection of the plant data to be sent to the manufacture must be conducted at the site side, and the burden on the site side may increase. Besides, since there are products of various manufactures including large and small manufactures mixed in a single plant, it would be impossible to dispose the data servers in the all manufactures.

On the other hand, although it may be thinkable that the analysis and diagnosis might be conducted in the computer on the site side, for example, it would not be realistic because the manufacture would have to disclose their know-how to the site side.

The present invention is proposed to solve the problem disclosed above. The object of the present invention is to provide a plant-service data server and a method for providing plant-service information, by which a service provide such as a manufacture can provide a service of plant operation management efficiently.

### Disclosure of Invention

The present invention achieves the above-mentioned object. According to a first aspect of the present invention, there is provided a plant-service data server for providing a manager of a plant with service information useful for management of the plant based on operation data relating to the operation condition of the plant, the server comprising: means for receiving operation data from the plant through a communication network; operation-data storing means for storing the operation data; service-information-providing item registering means for registering service-information-providing items which are useful for management of the operation of the plant and are provided by a plurality of service information providers that provide service information useful for operation of a plant based on at least part of the operation data; service-information acquiring means for acquiring service information corresponding to service-information-providing items based on the operation data; and means for transmitting the acquired service information to the manager of the plant through the communication network.

According to a second aspect of the present invention, there is provided a method for providing a manager of at least one plant with plant-service information useful for management of the plant, based on operation data relating to operation of the plant, from a data server, the method comprising: a step of the data server receiving operation data from the plant through a communication network; an operation-data storing step of storing the operation data; a service-information-providing item registering step of registering service-information-providing items which are useful for management of the operation of the plant and are provided by the plurality of service information providers that provide service information useful for operation of the plant based on at least part of the operation data; a service-information acquiring step of the data server acquiring service information corresponding to service-information-providing items based on the operation data; and a step of transmitting the acquired service information from the data server to the manager of the plant through the communication network.

### Brief Description of Drawings

Figure 1 is a block diagram showing an overall construction of an embodiment of a data providing system of a power plant according to the present invention.
Figure 2 is a block diagram showing operation from the contracting step of collecting and storing plant data to actual collecting and storing in a data server of a service center of an embodiment according to the present invention.
Figure 3 is a block diagram showing a case of charging the user or the site for data storage fee based upon the data storing time period by the data server of the service center of an embodiment of the present invention.
Figure 4 is a block diagram showing a case of charging the user or the site for data storage fee based upon the data storing volume by the data server of the service center of an embodiment of the present invention.
Figure 5 is a block diagram showing a case of registering the services of data processing which can be generated using the plant data, in the data server of the service center of an embodiment of the present invention.
Figure 6 is a block diagram showing a case of charging a manufacturer that has registered services in the data server of the service center of an embodiment of the present invention.
Figure 7 is an explanatory diagram showing displayed images on the display device when the user selects the services which have been registered in the data server of the service center of an embodiment of the present invention.
Figure 8 is a block diagram showing a case of charging the user for the service selection according to an embodiment of the present invention.
Figure 9 is a block diagram showing a case of transferring the service fee from the users to the manufacturers via the data center according to an embodiment of the present invention.
Figure 10 is a block diagram showing a case of charging the manufacturers' service fee directly on the users according to an embodiment of the present invention.
Figure 11 is an explanatory diagram showing processed results of the plant efficiency implemented by the data processing means according to an embodiment of the present invention.
Figure 12 is a block diagram showing an abnormal-indication processing function which processes abnormal indications by the data processing means according to an embodiment of the present invention.

### Best Mode for Carrying Out the Invention

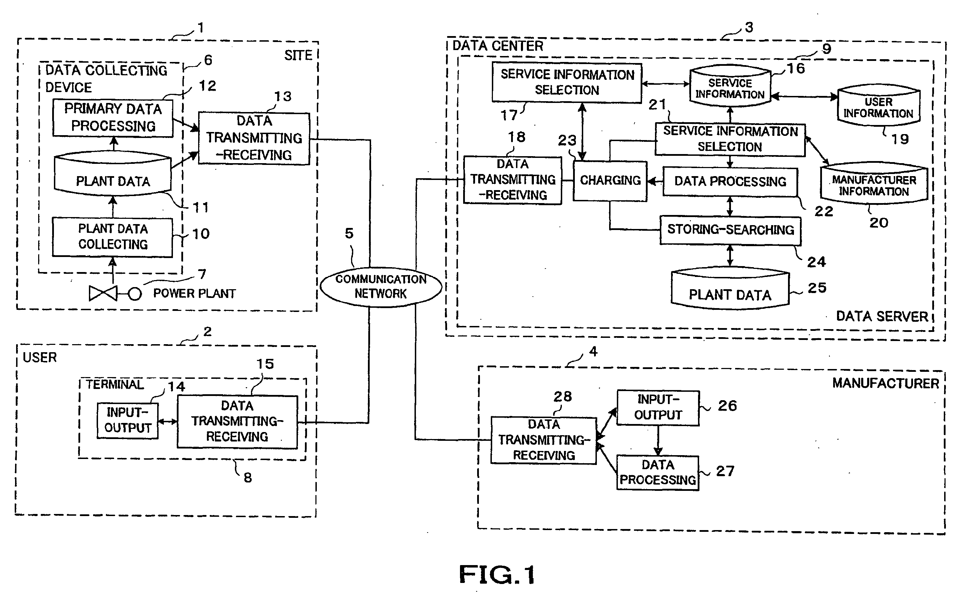

Now, an embodiment of the present invention is described. Figure 1 is a block diagram showing an overall construction of an embodiment of a data providing system of a power plant according to the present invention.

A site 1 has a power plant 7 such as a thermal power plant. The site 1 collects plant data from the power plant 7 by a plant-data collecting device 6, and sends out the plant data to the communication network 5 via a data transmitting device 13.

The plant-data collecting device 6 collects information from sensors of power plant component devices by the plant-data collecting means 10, and stores the collected data in plant-data storing means 11. The plant data stored in the plant-data storing means 11 are primarily processed by a primary data processing means 12.

The plant data collected in the site 1 is sent out to a data center 3 via the data transmitting-receiving means 13 through the communication network 5 such as The Internet.

The plant data collected at the site 1 are digital information representing the plant condition such as temperatures, pressures and flow rates, which are input from sensors disposed on various devices in the power plant 7 or from other computers, portable terminals, for example. There may be a single plant-data collecting device 6 or alternatively there may be a plurality of plant-data collecting devices 6 for collecting required data. Some plant-data collecting devices 6 can be temporarily set for data collection.

The data collection may be conducted not only through sensors but also through other data collecting devices or through manual input. The collected data may include any types of data if they are electronic and if they are input through the plant-data collecting device. The plant data sent out from the data transmitting-receiving means 13 may or may not be primarily processed data.

The user 2 manages and operates the power plant 7 via the communication network 5. The user 2 has a terminal 8 such as a personal computer connected to the communication network 5. The user 2 transmits and receives data by connecting to the communication network 5 via the data transmitting-receiving means 15 of the terminal 8. Thus, the user 2 operates and manages the power plant 7 by inputting and outputting data through the input-output means 14 such as a key board and a CRT. The user 2 may be a headquarter of an electric company, for example, which administers a plurality of sites 1.

In addition, user's access to the data center 3 may be through a preliminary or during-process security function (not shown) which may include certification and data protection.

The data center 3 has a data server 9, which provides the user 2 and the manufacturer 4 with data as services by receiving the plant data from the site 1 and by storing and processing them. The data server 9 collects the plant data from the site 1 via the communication network 5 and stores them. The data server 9 processes the plant data and provides the user 2 or the manufacturer 4 for value with the processed data.

The data server 9 of the data center 3 is connected to the communication network 5 via the data transmitting-receiving means 18.

The service-information storing means 16 stores service information to be provided to the user 2. The user-information storing means 19 stores user information for identifying a plurality of sites 1 and users 2. The manufacturer-information storing means 20 stores manufacturer's information which has registered its services. The plant-data storing means 25 stores the plant data which have been sent from the plant-data collecting device 6 of the site 1. The plant-data storing means 25 also stores data which has been processed by the data processing means 22.

The storing-searching means 24 stores the plant data, which has been sent from the site 1, in the plant-data storing means 25. The storing-searching means 24 further searches plant data stored in the plant-data storing means 25. The data processing means 22 processes the data based upon the service contents of the plant data. The service-information registering means 21 registers the service contents of the manufacturer 4 in the service-information storing means 16 and adds data processing function from the manufacturer 4 to the data processing means 22.

The service-information selecting means 17 presents the service contents stored in the service-information storing means 16 to the user 2 via the communication network 5 for the user 2 to select the services. The charging means 23 charges the user 2 for sending processed data to the user 2, or charges the manufacturer 4 for registering and utilizing the data services. The charging here may be only calculating the amount of the charges and displaying the calculated results on the CRT or through written notice, and may further include account settlement.

The manufacturer 4 is connected to the network 5 via the data transmitting-receiving means 28. The manufacturer 4 registers the service processing methods and the service menu in the manufacturer's information 20. The manufacturer 4 further processes the plant data stored in the data server 9 by the data processing means 22 and/or the data processing means 27, and the results are stored in the plant-data storing means 25. The manufacturer 4 further presents the results to the user 2 via the data server 9.

The manufacturer 4 is typically the manufacturer that has manufactured the power plant 7, and has various know-how and data relating to the devices. However, the manufacturer 4 can be replaced by others that can provide information useful for plant operation and management, such as a data processing expert or a software provider. A plurality of the manufacturers 4 may include one or more electric power companies that can provide the information services described above.

The manufacturers and the users are certified beforehand. The certification may be conducted by accessing to the data server using passwords or ID for identification.

Figure 1 shows a case with a single site 1, a single user 2, a single data center 3 and a single manufacturer 4. However, the numbers of the sites 1, the users 2, the data centers 3 or the manufacturers 4 may be more than unity.

Now, the relations between the site 1, the user 2, the data center 3 and the manufacturer 4 are described.

### (1) Step of Contraction between the User 1 / Site 2 and the Data Center 3

When a data-storing contract is made between the site 1 / user 2 and the data center 3, information such as a point ID, a point name, unit and number of digits is sent from the site 1 to the data server 9 of the data center 3 corresponding to the data items of the plant data which are sent from the site 1 to the data center 3. Then, the area for storing the information of the site 1 is secured in the plant-data storing means 25. Then, the data items and the contract-identifying information are stored. The point ID may be a data item number and the point name may be the name of the data item, for example.

When the contract is made, charging methods -- charging methods based on the stored data volume or charging methods based on the data storing time period, for example -- are also agreed upon between the user 1 / site 2 and the data center 3. The contract is given contract identification information for identifying the contractors and the data to be stored as a package.

### (2) Step of Collecting and Storing the Plant Data

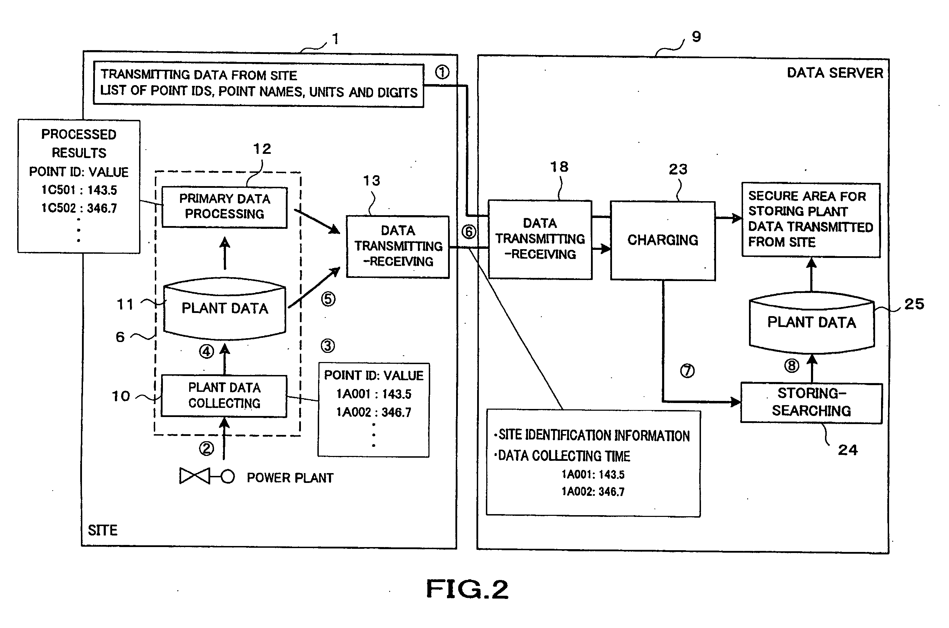

Figure 2 is a block diagram showing the operation from the contracting step of collecting and storing plant data to the actual implementing step of collecting and storing in the data server 9 of the service center 3.

The process values sent from the various sensors attached on the power plant 7 are collected as plant data by the plant-data collecting means 10 of the plant-data collecting device 6. Then, pre-determined point IDs and data-collecting time information are added to the plant data. The plant-data collecting device 6 may be a unit computer or a data logger which monitors and controls the plant, for example. The plant data collected by the plant-data collecting means 10 are temporarily stored in the plant-data storing means 11 together with the point IDs and the data-collecting time information.

At the site 1, the plant data stored in the plant-data storing means 11 are added with contract-identifying information and time information of the data collection, and then, sent out to the data center 3 by the data transmitting-receiving means 13 via the communication network 5.

In some cases, the plant-data collecting device 6 may have a primary data processing means 12, and the plant data from the sensors on the component devices of the power plant 7 may be utilized to indicate the plant condition. In such cases, the plant data may be primarily processed into values such as plant efficiency, for example. In such cases, the data processed by the primary data processing means 12 may be added with the point ID, the contract identification information and the data-collecting time information, and sent out to the data center 3.

The data transmission can be periodic, or the transmission time can be decided based on the plant data condition. Alternatively, the data can be transmitted when a request for sending data is made via the data center. The plant-data collecting means 10 or the temporary data processing means 12 may have function of deciding the data transmission time.

If the plant-data collecting device 6 of the site 1 does not have plant-data storing means 11, the plant data is sent from the plant-data collecting means 10 directly to the data center 3 via the data transmitting-receiving means 13. The plant data is added with the contract-identifying information.

At the data server 9 disposed in the data center 3, the plant data sent from the plant-data collecting device 6 at the site 1 is received by the data transmitting-receiving means 18. Then, the plant data goes through the data charging means 23 and the storing-searching means 24, and is stored in the plant-data storing means 25 with the point ID which is accompanied to the sent data. The storing-searching means 24 decides the storing locations in the plant-data storing means 25 based on the contract-identifying information which is accompanied to the plant data, and then, the storing-searching means 24 stores the plant data. The storing-searching means 24 can secure the confidentiality of each data by deciding the storing locations in the plant-data storing means 25 based on the contract-identifying information, and by confirming the validity of the contract-identifying information.

### (3) Charging for Collecting and Storing the Plant Data (Charging Based on the Using Time Period)

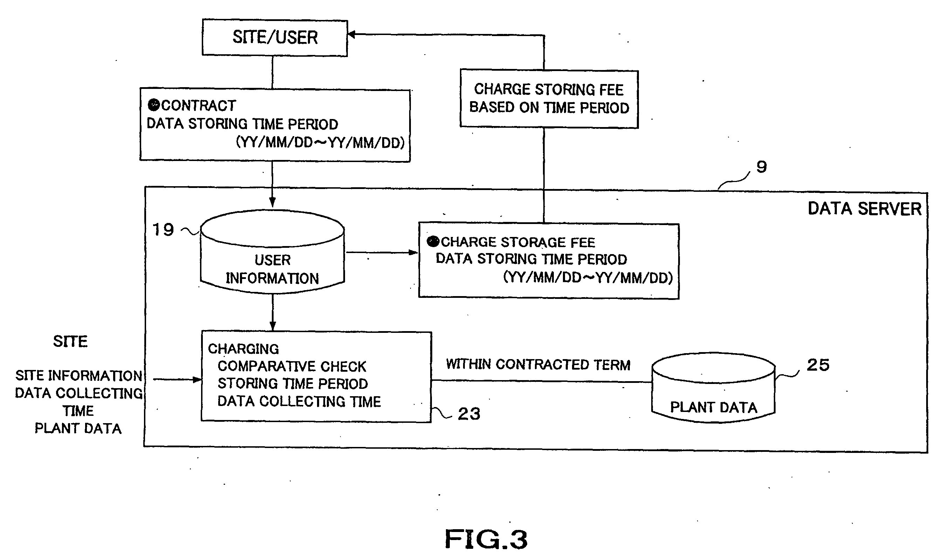

Figure 3 is a block diagram showing a case of charging the user or the site for data storage fee (usage fee) based upon the data storing time period by the data server 9 of the service center 3.

As shown in Figure 3, the site 1 / user 2 and the data center 3 make a contract on the data storing time period beforehand. The charging means 23 in the data server 9 of the data center 3 checks whether the site information and the data collection time, which are attached to the sent plant data, are within the contracted time period. If the plant data is within the contracted time period, the data is stored in the plant-data storing means 25. The charging means 23 calculates the storage/usage fee for the contracted time period, and charge it to the site 1 or the user 2 either via the communication network 5 or through written notice.

### (4) Charging for Collecting and Storing the Plant Data (Charging Based on the Stored Data Volume)

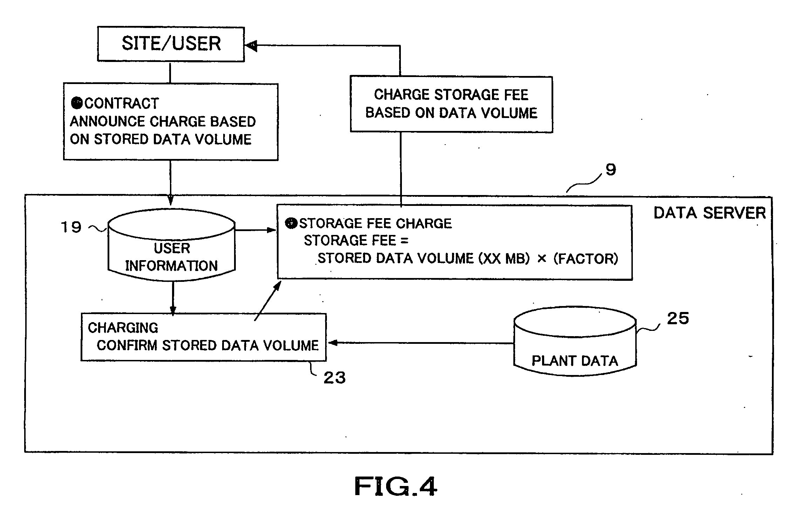

Figure 4 is a block diagram showing a case of charging the user or the site for data storage fee (usage fee) based upon the volume of the data stored in the data server 9 of the service center 3.

As shown in Figure 4, the charge may be based on the volume of the stored data. In this case, the charging means 23 of the data server 9 in the data center 3 calculates the amount of the usage of the data server, based on the volume of the plant data, which has been sent from the site 1, or the volume of the data stored in the plant-data storing means 25 multiplied by a pre-determined factor. Then, the charging means 23 charges the site 1 or the use 2 via the communication network 5 or through written notice. The charging information is stored in the user-information storing means 19 of the data server 9. The charging information can also be looked up by the data center 3.

### (5) Registration of Services

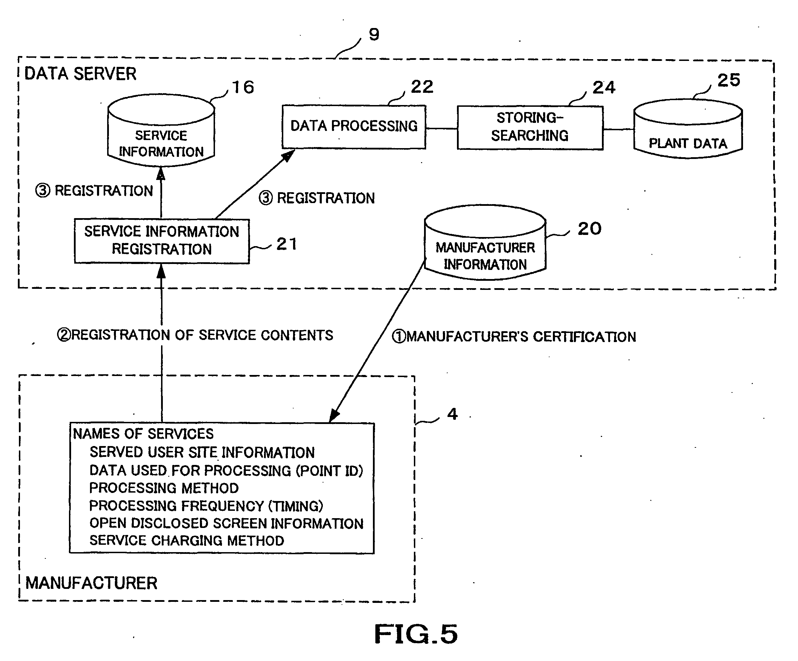

Figure 5 is a block diagram showing a case of registering the services of data processing that can be generated using the plant data, in the data server 9 of the service center 3. The manufacturer 4 processes the data using the plant data stored in the data server 9, and provides the user 2 with the processed data for value. There may be a plurality of manufacturers 4, and one of the manufacturers 4 may be the data center 3.

The data processing here is computer processing using the plant data, and the processed data is the result processing by the computer. The processed data may include, for example, efficiencies of various component devices (equipment) constituting the power plant calculated from the plant data, efficiency changing factors estimated from the plant data, and the heat loss at the start of the power plant calculated from the plant data.

The manufacturer 4 is connected to the data server 9 of the data center 3 from the input-output means 26 such as a personal computer, via the communication means 28 through the communication network 5, as shown in Figure 1. When the manufacturer 4 is connected to the data server 9, the certification information, with which the manufacturer 4 can be certified by the data server 9, is sent. Then, the data server 9 identifies the manufacturer 4.

The manufacturer 4 registers the data processing services in the data server 9 using the service-information registering means 21 of the data server 9 through the input-output means 26.

Thus, the data, which is used for data processing, out of the plant data stored in the plant-data storing means 25, and the data processing function using the data are registered in the data server 9 in the manufacturer 4. At the same time, other information including image plane information, which is used for providing the user 2 with the data using an Internet browsing software, for example, via the communication network, is also registered

The service information of the processed data is stored by the service-information storing means 16 as the service information. The method of charging, which is applied when the user 2 has used the data processing function stored in the data processing means 22, is also stored in the service-information storing means 16. The manufacturer-information storing means 20 stores the fact that the service information of the processed data is registered and the content of the service information.

When the data center 3 is the manufacturer 4 itself, the data server 9 can directly register the data processing functions in the data processing means 22 without using the communication network 5.

### (6) Charging on the Manufacturer for the Service Information Registration

The charging means 23 of the data server 9 charges pre-determined service registration fee when the manufacturer 4 registers its service information in the data server 9. The data center 3 charges the manufacturer 4 either via the communication network 5 or through written notice. When it charges via the communication network 5, the contents of the bill are displayed by the input-output means 26 of the manufacturer 4.

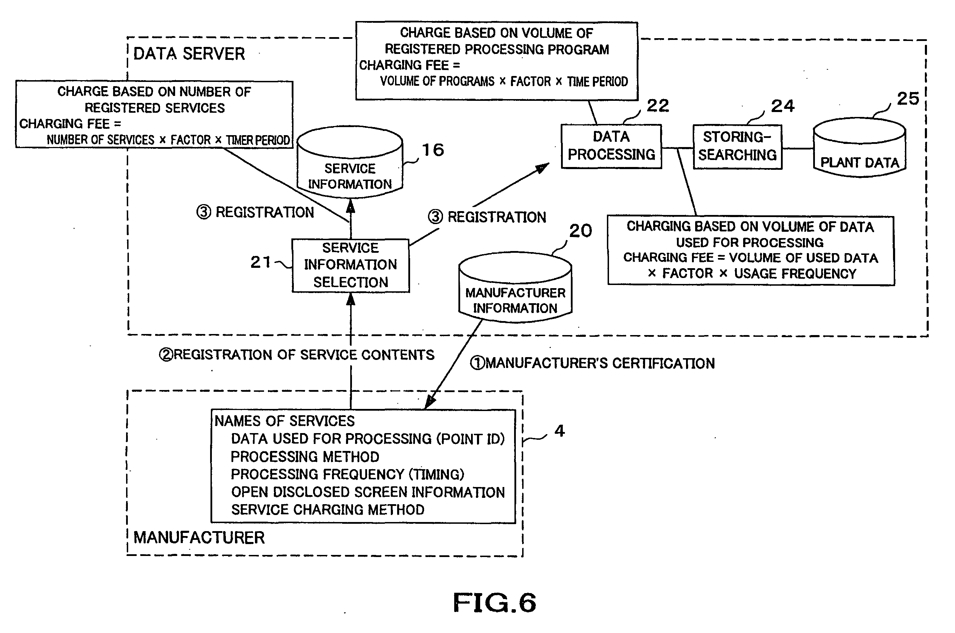

Figure 6 is a block diagram showing a case of charging the manufacturer 4 that has registered services in the data server 9 of the service center 3. As shown in Figure 6, the charging method may include, for example: a method of the number of the services multiplied by a pre-determined factor and the registration time period; a method of the amount of registered processing programs (data processing function) multiplied by the registration time period; and a method of the number of plant data items used for data processing (volume of the used data) multiplied by a factor and the frequency used. The charging information is stored also in the manufacturer-information storing means 20 of the data server 9, and can be looked up from the data center 3 side.

### (7) Step of Service Selection by the User

The data center 3 provides the user 2 with the service information, which has been stored in the service storing means 16 of the data server 9, using the service-information selecting means 17 via the communication network 5. This information may be displayed by the input-output means 14 of the terminal 8 of the user 2, using an Internet browser, for example. Alternatively, the information may be sent by e-mail. The information may be sent through written notice. If the user 2 administers a plurality of sites 1, the user 2 would input information about the site 1, of which the services would be provided.

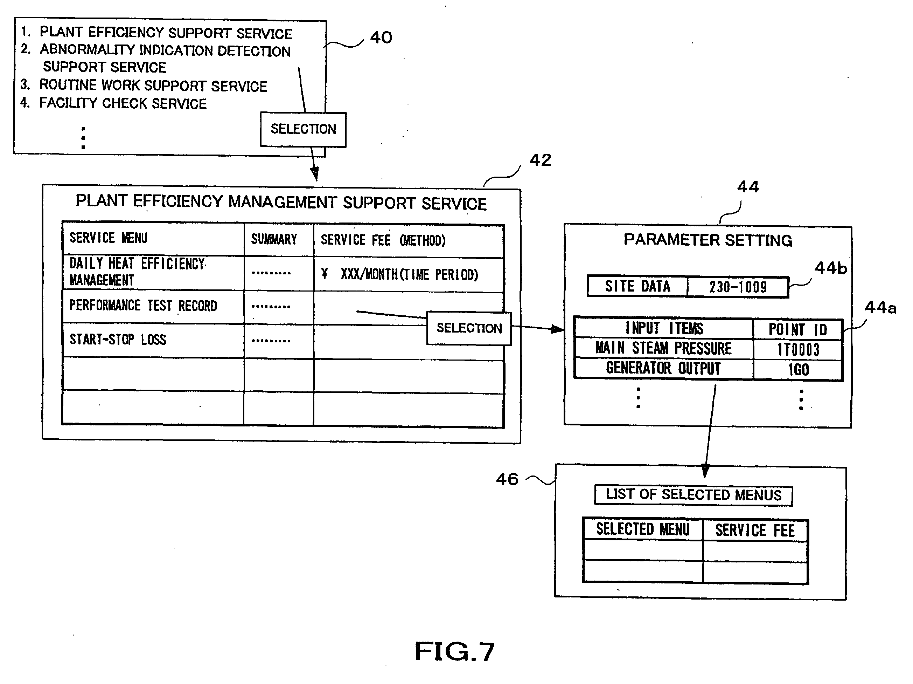

Figure 7 is a block diagram showing a case where the user selects the services which have been registered in the data server 9 of the service center 3. Referring to Figure 7, the user selects one or more services which the user wants to use out of the service list viewing screen 40. Figure 7 shows a case where "1. Plant Efficiency Support Service" is chosen. Then, a service menu is chosen which the user wants to utilize. Then, on the parameter setting screen 44, the user 2 designates the point IDs 44a corresponding to the items, which are registered by the manufacturer 4 as required for processing the data of the plant about which the user 2 receives the services. Thus, the parameters (e.g. point IDs), which are required for the services, are designated and set by the user 2.

When the parameters are set, the contract-identifying information 44b which has been input at the contract step between the user 2 / site 1 and the data center 3.

As a result of inputting the contract-identifying information, the plant data can be identified when there are a plurality of subject sites or when there are a plurality of contracts between the same user 2 / site 1 and the data center 3. In addition, the storing-searching means 24 can check the contract-identifying information when the plant data is to be accessed so as to decide whether the access is allowed or not. Thus, the user and the manufacturer that access the plant data can be limited, and the plant data confidentiality is secured.

The service information selected by the user 2 is added with information for identifying the user 2 by the data server 9 and information for identifying the site 1 that receives the service. Then, the service information is sent to the data server 9 of the data center 3. Then, the service information is stored by the user-information storing means 19 through the charging means 23, the service-information selecting means 17 and the service-information storing means 16.

Furthermore, a search condition file, which is used for searching the data when the computation process is implemented, is automatically created based on the point ID information of the plant, which received the registered services, corresponding to the data items required for the service processing. The search condition file is stored in the data server 9. When the computation process is implemented, the data required for the computation process of the plant is retrieved from the search condition file.

The service selection by the user 2 can be implemented through written notice, for example, rather than via the communication network 5. Then, the manager of the data center 3 can register the selected services in the user-information storing means 19 of the data server.

### (8) Charging on the Service Selection

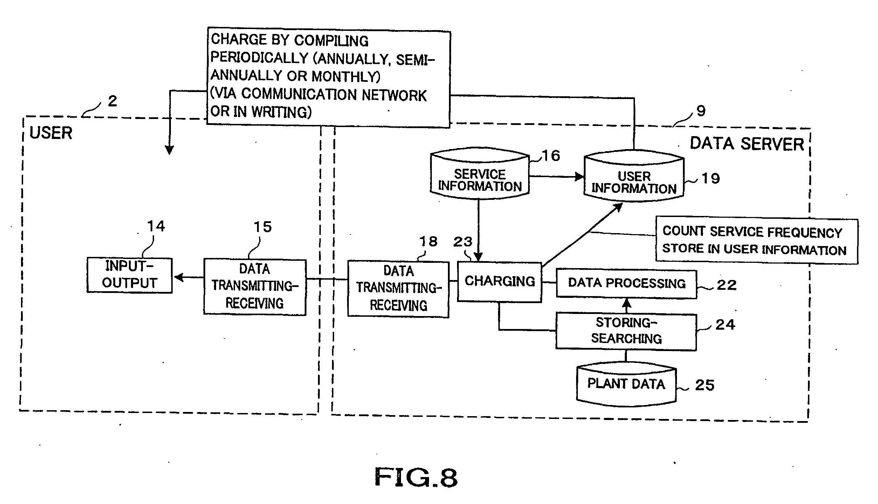

Figure 8 is a block diagram showing a case of charging the user for the service selection. When the user 2 selects a service, the charging means 23 of the data server 9 calculate the service fee corresponding to the service content the user has selected, based the pre-determined service fee for the service content. Then, this information is sent to the user 2 either via the communication network 5 or through written notice, and the information also is stored in the user-information storing means 19.

Some service fees may be charged on the time period when the user 2 receives the services, and other service fees may be charged on the frequency that the user 2 has received the services. The service fees charged on the time period is calculated periodically -- every year, every half year or every month, for example, by the data server 9. Then, the data server 9 sends the bill to the user 2 via the communication network 5 or through written notice.

When the service fees are charged on the usage frequency, the charging means 23 counts the frequency that the user 2 has connected to the data server 9 and han received the services. The charging means 23 then calculates the usage amount by multiplying the usage frequency by a usage unit price factor. Then, the' charging means 23 charges the user 2.

### (9) Service Fee Charging Notice form the Data Center to the Manufacturer

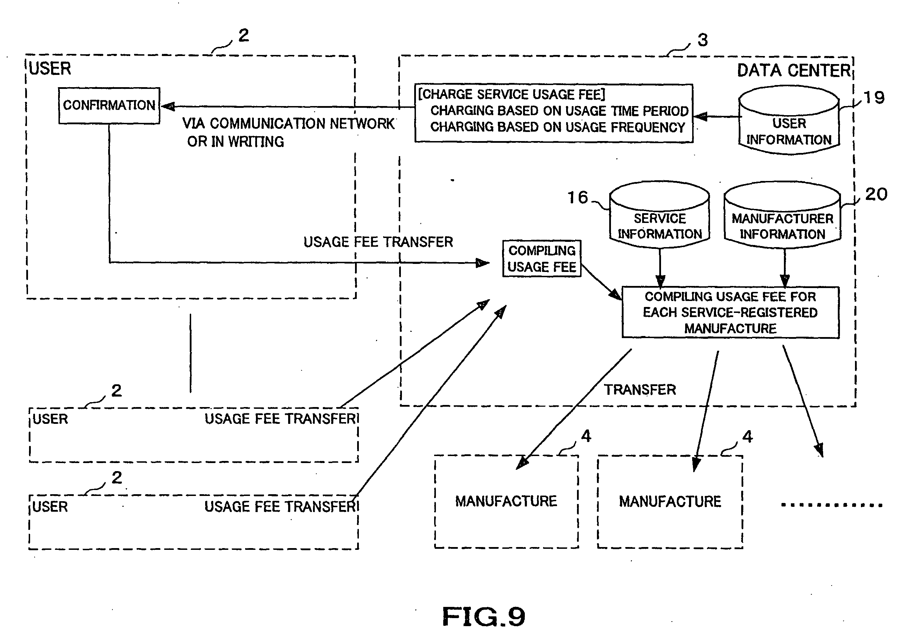

Figure 9 is a block diagram showing a case of transferring the service charge from the user to the manufacturer. The data center 3 divides the charging information for each manufacturer 4 that has registered the service, and sends the information to the corresponding manufacturers 4 via the communication network 5 or through written notice. Then, the data center 3 transfers all or part of the service usage fee collected from the user 2 to the manufacturer 4.

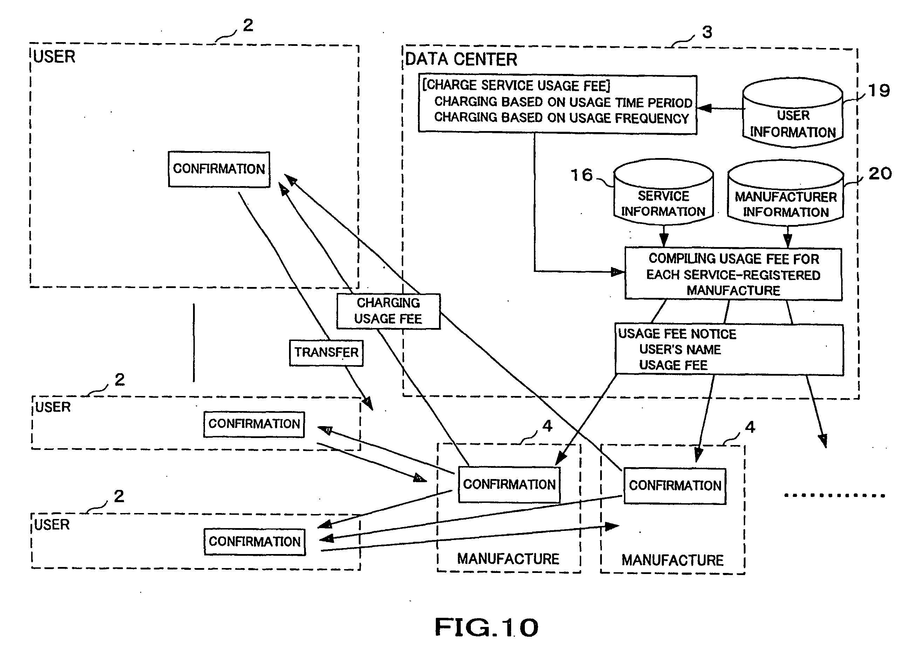

Figure 10 is a block diagram showing a case of charging the service fee by the manufacturers directly on the users. The manufacturers 4 looks up the charging information of the users 3, which receive the registered services of the manufacturers 4, via the communication network 5. Then, the manufacturers 4 charge the service fees directly on the users 3. Alternatively, the manufacturers 4 can receive written notice of the charging information from the data center 3, and charge the service fee on the users 3.

### (10) Data Processing (1)

Now, the data processing means 22 of the data server 9 at the data center 3 is described. In the data processing means 22, data processing function registered by the manufacturer 4 is stored and implemented.

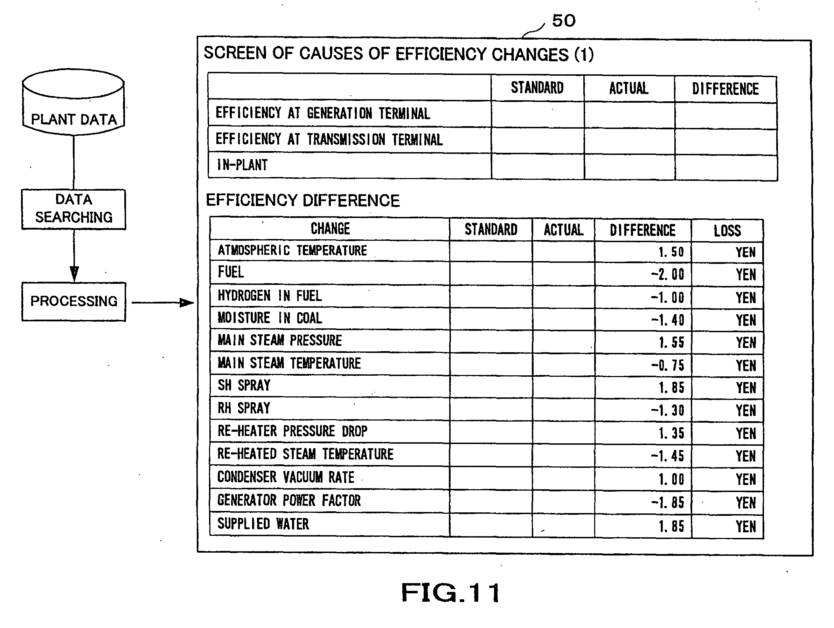

The service information selected by the user 2 is stored in the user-information storing means 19 of the data server 9. As shown in Figure 11, for providing a service, the storing-searching means 24 searches plant data of the site required for processing for the service, in the user plant data storing area in the plant-data storing means 25, based on the service information selected by the user 2. Then, the data processing means 22 implements the data processing function registered by the manufacturer 4, using the searched plant data.

The process implemented by the data processing means 22 may include, for example: data processing for calculating plant efficiency and each component efficiency; data processing for supporting abnormality indication detection of the plant and the components; data processing for supporting technical work using the plant data such as the work periodically executed in the power plant 7; and data processing for evaluating the component data. In the example shown in Figure 11, the results 50 of the factors of the plant efficiency changes evaluated by the data processing means 22 are displayed by a display device, for example. The efficiency differences may be conspicuously displayed in a bar chart, for example.

The data processed by the data processing means 22 is sent via the charging means 23 from the data transmitting-receiving means 18 to the user 2 through the communication network 5. At the user 2, the processed and sent data is displayed by the input-output means 14 via the data transmitting-receiving means 15 of the terminal 8.

### (11) Data Processing (2)

The plant-data storing means 25 stores the plant data of a plurality of sites 1. Thus, when there is information of a plant abnormality indication or a trouble in a certain site 1, the plant-data storing means 25 searches in the other sites 1, which have related components, for useful information to prevent a trouble of the subject site. Then, the useful information is provided to the subject site.

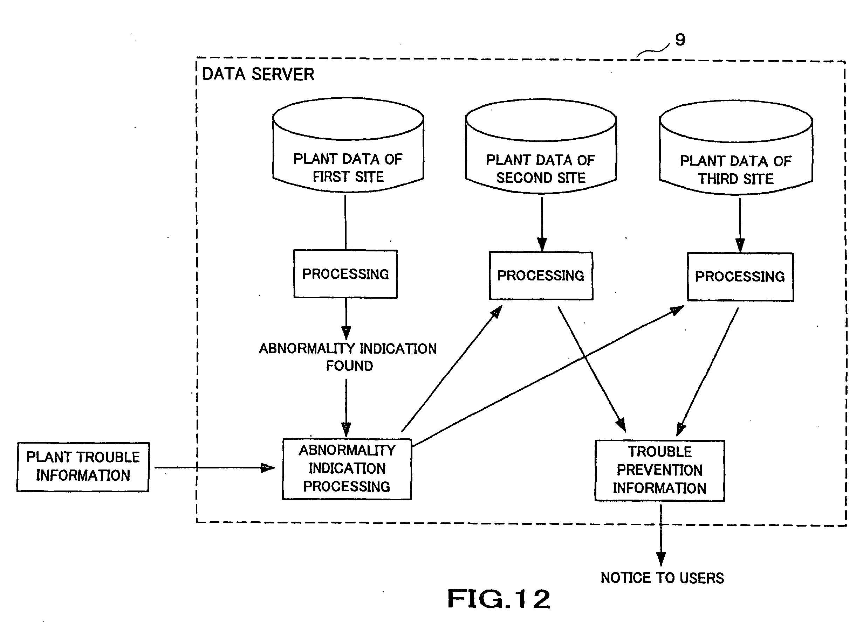

Figure 12 is a block diagram showing an abnormal-indication processing function that processes abnormal indications. The abnormal-indication processing function searches for the common components in second or third sites as the component which has indicated abnormality in the first site, and provides the second and third sites and the user(s) that administer the sites with the information useful for preventing the trouble in the second and the third sites. For example, when a certain pump of the first site has an abnormality, the second and the third sites are searched where the same type of pumps are used, and information identifying the plant data which has abnormality is provided to the sites. Thus, problems can be prevented. The abnormality indication processing is newly added to the data server 9 as a data processing function, and the user is provided with this processing function as a service.

### (12) Service Providing Method (Timing)

The data processed by the data processing means 22 of the data server 9 is sent to the user 2 via the communication network 5. The data is sent on a display demand of the user 2, from the terminal 8 of a personal computer, for example, of the user 2 side connected to the Internet. The user identification information which has been provided by the service provider beforehand is sent with the processed data. Thus, the data processing means 22 of the data server 9 identifies the user 2 and implements the data processing function of the subject service. Then, the processed results are transmitted through the communication network 5. The transmitted data is displayed by the input-output means 14 of the terminal 8 of the user 2.

The data processing means 22 are operated by the data server 9 side periodically. When a pre-determined threshold value is achieved for the user 2 to be announced, or when a component abnormality is found, for example, an announcement is sent from the data server 9 side to the terminal of the user 2, via e-mail, for example. The user 2 connects from the terminal 8 to the data server 9 of the service provider via the communication network 5 when the user 2 received the message from the data server 9. At that time, the user 2 also sends the user's identification information, so that the data server 9 confirms and allows to send detailed processed data to the user 2. The processed and sent data is received by the terminal 8 of the user 2 and displayed by the input-output means 14.

### (13) Processing Steps in Case of Efficiency Management Support Service

Now an example of daily heat efficiency management service for supporting efficiency management of the power plant 7 according to the process steps described above is described below.

### (a) Step of Contracting between the User/Site and the Data Center

The user 2 sends information such as the point IDs, the point names, units and the number of digits to the data server 9 of the data center 3, via the communication network 5, in order to store the plant data of the site 1 that the user 2 administers. Then, a storing area is secured in the plant-data storing means 25 on the data server 9 side. The user 2 selects a charging method based either on the contract time period or on the stored data volume. Then, the data server 9 stores the content of the charging method in the user-information storing means 19.

### (b) Step of Service Information Registration by the Manufacturer

The manufacturer 4 registers the efficiency calculation using the plant data in the data server 9, using the input-output means 26. When the registration is implemented, data required for calculation (e.g. main steam pressure, main steam temperature, generated electric power and fuel flow rate) is registered. In addition, the charging method and the usage fee are also registered.

### (c) Step of Service Selection by the User

The user selects the daily heat efficiency management service by the service-information selecting means 17 of the data server 9, through the communication network 5. The user also sets the items of the subject plant by their point IDs, for example, corresponding to the items required for calculation (e.g. main steam pressure, main steam temperature, generated electric power and fuel flow rate).

### (d) Storing the User Registration Information by the Data Server

The selected service information is stored in the user-information storing means 19. Then, the search condition file. is registered using the information registered corresponding to the plant I. D. so that corresponding data can be retrieved when the computation is implemented.

### (e) Step of Service Implementation

The daily heat efficiency management service calculates daily plant efficiency. It retrieves required plant data stored in the data server 9, and executes heat efficiency calculation to obtain the plant efficiency.

Therefore, it calculates the efficiency automatically everyday or in response to a request from the user 2. The calculated results are reported to the user 2 via the communication network 5. The reports to the user 2 may be on a daily basis or may be compiled for longer terms.

### (f) Step of Charging the Services

The usage fee is charged according to a charging method selected by the user 2 out of the charging methods, which the manufacturer 4 has registered when the manufacturer 4 registered the daily heat efficiency management service.

Charging may be based on the time period of the service usage or on the usage frequency. When the charging is based on the time period of the service usage, the data center 3 or the manufacturer 4 charge the user 2 periodically (e.g. monthly) during the contract time period. When the charging is based on the usage frequency, the data server 9 counts the frequency that the user 2 has used the service, and calculates the usage fee by the frequency multiplied by a factor. Then, the data center 3 or the manufacturer 4 charge on the user 2. When the manufacturer 4 charges, the data center 3 sends information on the usage time period and the usage frequency to the manufacturer 4 that has registered the service.

### (g) Step of Charging the Manufacturer

The data center 3 charges the manufacturer 4 that has registered the service on its service registration fee. The charge may be based on the registration time period or on the volume of the registered computation process, for example. The fee may be calculated by the registration time period or the volume of the registered computation process multiplied by factors.

As described above, according to the present invention, the plant operation management service can be provided to a user without installing a data server on the site. Besides, the user can have devices for diagnosis and analysis of the power plant with enhanced efficiency, and can reduce maintenance cost and manpower cost, because the manufacturer can provide the user with processed data and data processing services using the plant data.

## Claims

1. A plant-service data server for providing a manager of a plant with service information useful for management of the plant based on operation data relating to the operation condition of the plant, the server comprising:
means for receiving operation data from the plant through a communication network;
operation-data storing means for storing the operation data;
service-information-providing item registering means for registering service-information-providing items which are useful for management of the operation of the plant and are provided by a plurality of service information providers that provide service information useful for operation of a plant based on at least part of the operation data;
service-information acquiring means for acquiring service information corresponding to service-information-providing items based on the operation data; and
means for transmitting the acquired service information to the manager of the plant through the communication network.

2. The plant-service data server according to Claim 1, wherein:
the server further comprises means for transmitting at least part of the operation data to the plurality of service information providers through the communication network; and
the service-information acquiring means includes means for receiving the service information from the plurality of service information providers through the communication network.

3. The plant-service data server according to Claim 2, further comprising storing means for storing the service information received from the plurality of service information providers through the communication network.

4. The plant-service data server according to Claim 1, wherein the service-information acquiring means includes means for processing the operation data in the plant-service data server.

5. The plant-service data server according to Claim 1, comprising: means for registering at least one service-information requesting item which the manager of the plant has selected; and means for providing the manager of the plant with only the service information corresponding to the registered service-information requesting item.

6. The plant-service data server according to Claim 1, further comprising:
operation-data storing-condition input means for inputting items, operation data collecting cycles and storing time periods of the operation data in the operation-data storing means; and
means for securing data-storing areas in the operation-data storing means to fit the conditions inputted by the operation-data storing-condition input means.

7. The plant-service data server according to Claim 1, further comprising manager-charge calculation means for calculating fee to be charged on the manager of the plant.

8. The plant-service data server according to Claim 7, wherein the manager-charge calculation means includes means for calculating the fee to be charged on the manager of the plant, based on at least one selected from a group consisting of volume and time period of the operation data stored by the operation-data storing means.

9. The plant-service data server according to Claim 7, wherein the manager-charge calculation means includes means for calculating the fee to be charged on the manager of the plant, based on at least one selected from a group consisting of frequency and time period of the provision of the service information to the manager of the plant.

10. The plant-service data server according to Claim 1, further comprising service-information-provider charge calculation means for calculating fee to be charged at least one of the plurality of service providers on the service information provided by the service information provider in respect to the operation management of the plant.

11. The plant-service data server according to Claim 1, further comprising transfer-amount calculating means for calculating amount to be transferred, which is part of the amount calculated by the manager-charge calculation means, to the service information provider.

12. The plant-service data server according to Claim 1, further comprising: means for calculating direct-pay amount to be paid directly from the manager to the service information providers as part of the amount calculated by the manager-charge calculation means; and means for informing the manager and the service information providers, of the direct-pay amount.

13. A method for providing a manager of at least one plant with plant-service information useful for management of the plant, based on operation data relating to operation of the plant, from a data server, the method comprising:
a step of the data server receiving operation data from the plant through a communication network;
an operation-data storing step of storing the operation data;
a service-information-providing item registering step of registering service-information-providing items which are useful for management of the operation of the plant and are provided by the plurality of service information providers that provide service information useful for operation of the plant based on at least part of the operation data;
a service-information acquiring step of the data server acquiring service information corresponding to service-information-providing items based on the operation data; and
a step of transmitting the acquired service information from the data server to the manager of the plant through the communication network.

14. The method for providing plant-service information according to Claim 13, wherein:
the method further comprises a step of transmitting at least part of the operation data to the plurality of service information providers through the communication network; and
the service-information acquiring step includes: a generation step of the service information providers generating the service information, and a step of transmitting the service information generated by the generation step to the data server through the communication network.

15. The method for providing plant-service information according to Claim 13, further comprising a manager charging step of charging the manager of the plant on the provision of the service information from the data server.

16. The method for providing plant-service information according to Claim 13, wherein:
the at least one plant consists of a plurality of plants, and at least part of the plants have at least one common element;
the method for providing plant-service information further comprises:
an abnormality deciding step of deciding abnormality of the at least one common element based on the operation data; and
an announcing step of announcing status of abnormality to other plants which have the least one common element and their corresponding managers, when abnormality has been decided by the abnormality deciding step.
